# EUROPEAN PATENT SPECIFICATION

(11) **EP 3 419 864 B1**
(45) Date of publication and mention of the grant of the patent: **02.09.2020**
(21) Application number: 17716622.0
(22) Date of filing: 24.02.2017
(51) Int. Cl.: B60R 21/207, B60R 21/231, B60N 2/427, B60N 2/52

(54) **SEAT OF A COMMERCIAL OR INDUSTRIAL VEHICLE**
SITZ FÜR EIN NUTZ- ODER INDUSTRIEFAHRZEUG
SIÈGE POUR VÉHICULE COMMERCIAL OU INDUSTRIEL

(30) Priority: 25.02.2016 IT UB20161059
(43) Date of publication of application: 02.01.2019
(73) Proprietor: Iveco S.p.A., 10156 Torino (IT)
(72) Inventor: GALLARDO, Giovanni, 10020 Brusasco (IT); CERETTO CASTIGLIANO, Enrico, 10078 Venaria Reale (IT); FINOTELLO, Roberto, 10040 Lombardore (IT)
(74) Representative: Fiume, Orazio
(86) International application number: PCT/IB2017/051095
(87) International publication number: WO 2017/145116

(56) References cited:
- WO-A1-2015/145285
- DE-A1- 19 859 988
- DE-A1-102014 006 922
- US-A- 5 590 736
- US-A1- 2002 021 041
- US-B1- 6 206 412

## Description

### Technical field of the invention

The invention relates to the field of the seats of commercial or industrial vehicles. US2002/021041 discloses the features of the preamble of claim 1.

### State of the art

There is a very large use of airbags in the field of terrestrial vehicles.

They are available in different types and sizes. A seat of an occupant is known, whether it is the driver's seat or the seat of any other passenger, that has an airbag built-in in a side of the backrest.

Generally speaking, side airbags are designed so as to soften side impacts between vehicles. In order to protect the head of an occupant, the so-called curtain airbags are known, which are usually inserted in a fixed part of the vehicle surrounding the window.

By so doing, in case of a side crash, the curtain airbag protects the upper part of the torso of the occupant, namely humerus, neck and head, whereas the airbag built-in in the backrest protects the lower part of the torso, up to the pelvis.

Airbag activation times are very quick, as well as their deflation times after the activation. Generally speaking, airbags remain inflated for a few dozens of seconds, up to a minute, since, in case of side impact between vehicles, the occupants of the vehicle need to be able to easily free themselves.

In case of commercial and industrial vehicles, the situation is very different. As a matter of fact, in a commercial or industrial vehicle, the seats are located at a much greater height from the ground compared to the one of cars; therefore, an impact between a heavy vehicle and car usually does not cause damages to the occupants of the industrial vehicle.

From a statistical point of view, the most serious damages to the occupants of a commercial or industrial vehicle are not caused by crash impacts with other vehicles, but by the rollover of the vehicle itself.

Side airbags are known, which are inflated in response to a signal detecting a condition preceding the rollover of the vehicle. These airbags are aimed at protecting the side of the occupant when the side of the vehicle hits the ground. Airbags built-in in the side of the seat have a much slower dynamic compared to those used in cars, as rollover times are significantly longer. Hence, the time during which they remain inflated is longer as well, since it can exceed one minute.

Known solutions are not sufficient to preserve an occupant of a commercial or industrial vehicle.

### Summary of the invention

Therefore, the object of the invention is to provide a seat that is specifically designed for an occupant of a commercial or industrial vehicle.

In particular, a main object of the invention is to reduce the chance that a passenger might actually hit surrounding portions of the vehicle cab.

The idea on which the invention is based is that of carrying out a forced retraction of the driver's seat, so as to move the passenger towards the floor of the vehicle. According to a preferred variant of the invention, an inflatable protection is provided, which surrounds the three free sides of the backrest up to the seat cushion, so that this protection extends forwards, completely surrounding the sides and the head of the passenger in a continuous manner.

According to this variant of the invention, this is a seat in which the backrest and the headrest are in one piece and, therefore, the airbag - at least in an active condition - continuously surrounds both the the two opposite sides of the occupant and the head, projecting from the sides of the backrest and of the relative head rest.

Advantageously, the occupant is protected on all sides.

According to a first variant of the invention, this inflatable protection is obtained by means of a single airbag, whereas, according to a second variant of the invention, it is obtained by means of two or more inflatable modules, which, at least in an active - i.e. inflated - condition of the protection, are contiguous to one another long the perimeter of the backrest and of the headrest.

Advantageously, when one single airbag is implemented, it is capable not only of protecting the occupant, but also of better holding him/her.

According to the invention, the inflation of the airbag is obtained by means of a pressurized cold gas cylinder, instead of by means of an explosive charge. Preferably a second pressurized cylinder is suited to inject a polyurethane foam into the protection that was previously at least partially inflated. The seat comprises, furthermore, a pneumatic suspension system. When the airbag is activated, the pneumatic suspension is simultaneously deflated and retraction means cause the seat to move to a position close to the floor of the cab.

According to a preferred variant of the invention, these retraction means comprise a fluid piston operated by the same gas/fluid used for inflating the airbag. Advantageously, one single operation allows users to simultaneously inflate the airbag of the seat and move the seat to a less risky position for its occupant.

The subject-matter of the invention comprises a seat of a commercial or industrial vehicle.

The subject-matter of the invention also comprises a commercial or industrial vehicle comprising the aforesaid seat.

The claims describe preferred embodiments of the invention, thus forming an integral part of the description.

### Brief description of the figures

Further objects and advantages of the invention will be best understood upon perusal of the following detailed description of an embodiment thereof (and of relative variants) with reference to the accompanying drawings merely showing non-limiting examples, wherein:
figure 1 shows a schematic side view of the seat of an example of a seat according to the invention;
figure 2 shows a perspective view of a preferred variant of the seat of a figure 1 with a built-in airbag;
figure 3 shows a commercial or industrial vehicle implementing the seat according to figures 1 and/or 2.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

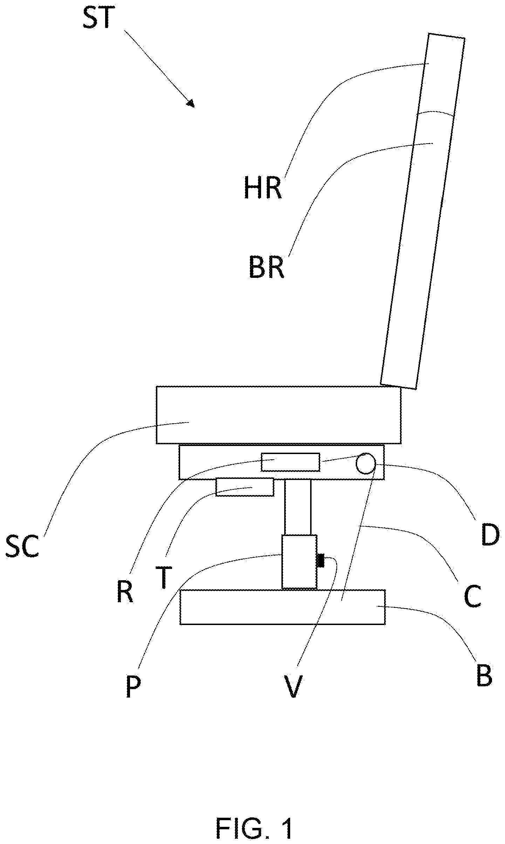

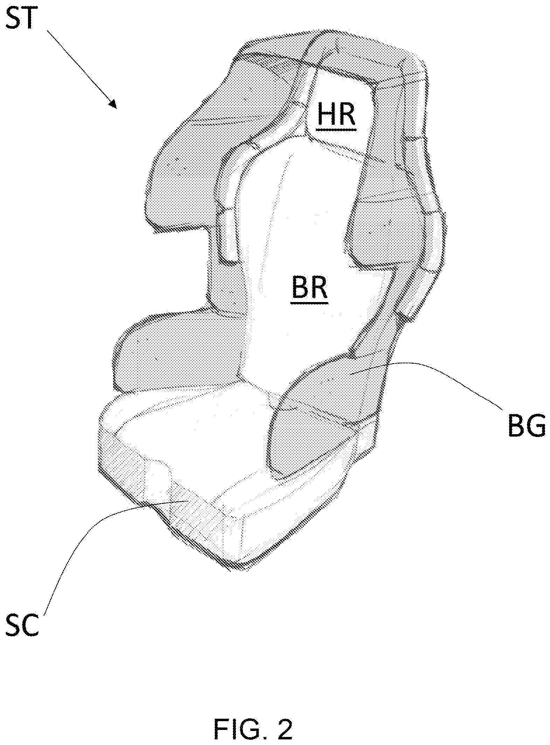

According to the invention, shown with reference to figures 1 and 2, a seat ST of a commercial or industrial vehicle comprises a seat cushion SC and a backrest BR connected to the seat cushion and a headrest HR fixed to the upper end of the backrest, and the backrest comprises an airbag BG which, at least in active inflated condition, uninterruptedly surrounds both sides of an occupant passing over the head of the occupant.

Preferably, the airbag is formed by a single inflatable chamber.

Advantageously, said airbag, when its made of a single inflatable chamber, can be fixed to the backrest not only to protect the occupant from possible objects hitting him/her, but also to hold the torso of the occupant.

As a matter of fact, the airbag is preferably designed so as to be deflated only after different minutes since its activation, namely at least 3 - 4 minutes.

As you will read more in detail below, a preferred variant of the airbag does not become deflated at all after its activation.

This ensures an efficient protection of the occupant, taking into account the fact the dynamic of heavy vehicle rollover is very slow and can last different seconds.

The seat comprises inflation means T of the airbag in response to an activation signal, which is usually generated by a sensor G on board the vehicle. Said inflation means are fixed to the seat and comprise a supply of pressurized cold gas, arranged to be injected into the airbag BG.

Preferably, said supply is fixed to a lower part of the seat cushion or at the base of the seat, so that, during possible movements of the seat carried out to adjust the latter relative to the pedals of the vehicle, everything moves with the seat, thus limiting as much as possible electric, pneumatic and mechanical connections between the floor of the vehicle and the seat ST.

According to a preferred variant of the invention, the inflation means T comprise, in addition to a supply of pressurized cold gas, a supply of high density foam, for example polyurethane foam, arranged to be injected into said airbag, when it is already at least partly inflated by said cold gas.

By so doing, the cold gas releases the airbag from the backrest of the seat, causes the airbag to reach a completely extended condition and, during this last step or following it, high density foam is injected into the airbag.

The seat, like the majority of seats for industrial or commercial vehicles, comprises a pneumatic support system, as it is particularly comfortable.

Said system usually comprises at least one piston P, interposed between a base B of the seat intended to be fixed, usually in a sliding manner, to a floor of a vehicle cab, and a lower part of the seat cushion SC.

According to the invention, the seat comprises a collapsing system of the seat, which, in response to an activation signal, preferably the same one that activates a vehicle airbag, preferably the airbag BG, causes the seat cushion of the seat to move towards the relative base.

The collapsing system according to the invention comprises
- optionally a valve V associated with said piston and configured to vent said piston P in response to said activation signal,
- retraction means R, D, C configured to move the seat cushion (SC) towards the relative base B, always in response to the aforesaid activation signal.

The vent valve V is not essential with the collapsing system, as the suspension could also be created with a torsional spring, rather than with a pneumatic piston. Anyway, the retraction means can be sized so as to be capable of operating the collapsing also countering the stretching force of the suspension of the seat.

According to a preferred variant of the invention, the retraction means comprise an actuator T and a cable C. The actuator is fixed to the seat cushion SC or to the backrest BR and said cable has a first end connected to the base B of the seat and a second end connected to the actuator T, so that a retraction of the cable by the actuator causes a movement of the seat cushion SC towards the base B. Evidently, the actuator can be fixed to the base B of the seat and the opposite end of the cable can be fixed to the seat cushion of the seat.

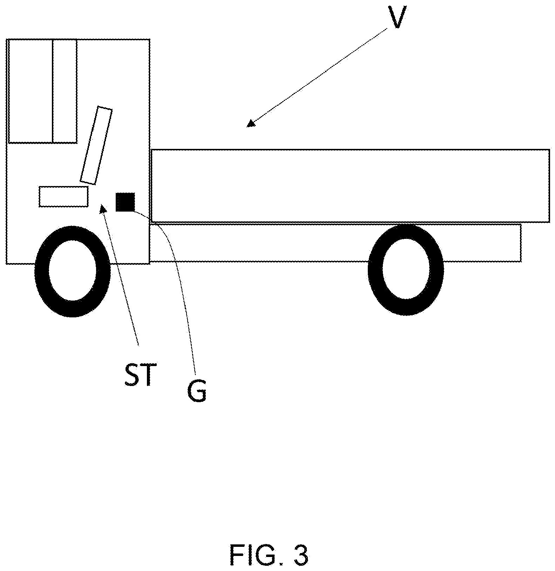

According to a preferred variant of the invention, which can be combined with the previous ones, the actuator consists of a fluid dynamic actuator operatively connected with the supply of pressurized cold gas T, so that, when the supply T releases the gas to inflate the airbag BG, it activates, at the same time, the actuator, which retracts the cable, thus determining the collapsing of the seat ST. The sensor G, which is schematically shown associated with the vehicle V of figure 3, can be a gyroscope or an inclinometer or it can coincide with the vehicle control unit (VCU), which implements ECS functions (electronic stability control) and/or ERM functions (electronic rollover mitigation). In any case, these are known device. These devices are capable of estimating a "non-return" condition, namely a condition in which an impending rollover is recognized, or they are capable of preventing said non-return condition from occurring.

Therefore, they are capable of generating an electric signal, which, for the purposes of the invention, is functional to the activation of the airbag BG of the seat ST and/or of the collapsing system of the seat.

The non-limiting example described above can be subjected to variations, without for this reason going beyond the scope of protection of the invention set forth in the claims.

When reading the description above, a skilled person can carry out the subject-matter of the invention without introducing further manufacturing details. The information contained in the part concerning the state of art only serves the purpose of better understanding the invention and does not represent a declaration of existence of the items described.

## Claims

1. Seat (ST) of a commercial or industrial vehicle comprising a seat cushion (SC) and a backrest (BR) connected to the seat cushion, as well as a pneumatic support system comprising at least one piston (P), interposed between a base (B) of the seat intended to be fixed to a floor of a vehicle cab, and a lower part of the seat cushion (SC), wherein the seat comprises a collapsing system of the seat in response to an activation signal of a vehicle airbag, wherein said collapsing system comprises retraction means (R, D, C) configured to force said seat cushion (SC) to move towards said base (B) in response to said activation signal,
the seat being **characterized in that** said retraction means comprise an actuator (R) and a cable (C), wherein said actuator is fixed to the seat cushion (SC) or to the backrest (BR) and said cable has a first end connected to said base (B) of the seat and a second end connected to said actuator, so that a retraction of the cable by the actuator causes a forced movement of said seat cushion (SC) towards the base (B),
wherein said seat comprises at least one inflatable airbag (BG) associated with said backrest,
wherein said retraction means (R) consists of a fluid dynamic actuator operatively connected with a supply of pressurized cold gas, so that, when said pressurized gas is released, inflation of said airbag (BG) and collapsing of the seat (ST) take place simultaneously.

2. Seat according to claim 1, further comprising a valve (V) associated with said piston and configured to vent said piston (P) in response to said airbag activation signal.

3. Seat according to claims 1 or 2, further comprising a headrest (HR) in one piece with an upper end of the backrest, wherein said backrest comprises an airbag (BG) which, at least in active inflated condition, uninterruptedly surrounds both sides of an occupant passing over the head of the occupant.

4. Seat according to claim 3, wherein said airbag is formed by a single inflatable chamber.

5. Seat according to any one of the preceding claims, wherein said airbag is configured so that, once activated, it remains inflated for at least 3 - 4 minutes.

6. Seat according to claim 5, wherein said inflation means (T) comprise, in addition to a supply of pressurized cold gas, a supply of high density foam, arranged to be injected into said airbag, when it is already at least partly inflated by said cold gas.

7. Industrial or commercial vehicle comprising a seat (ST) according to any one of the preceding claims.

8. Vehicle according to claim 7, further comprising means (G) for detecting a future overturning of the vehicle, configured to generate an activation signal to activate said airbag (BG) and/or to activate collapsing of said seat according to any of the preceding claims.

## Patentansprüche

1. Sitz (ST) für ein Nutz- oder Industriefahrzeug, umfassend ein Sitzkissen (SC) und eine Rückenlehne (BR), die mit dem Sitzkissen verbunden ist, sowie ein pneumatisches Stützsystem, umfassend mindestens einen Kolben (P), der zwischen einer Basis (B) des Sitzes, vorgesehen zur Fixierung an einem Boden einer Fahrerkabine, und einem unteren Teil des Sitzkissens (SC) angeordnet ist, wobei der Sitz ein als Antwort auf ein Aktivierungssignal eines Fahrzeugairbags zusammenfallendes System des Sitzes umfasst, wobei das zusammenfallende System Rückziehmittel (R, D, C) umfasst, die ausgeführt sind, um das Sitzkissen zu zwingen, sich als Antwort auf das Aktivierungssignal in Richtung der Basis (B) zu bewegen,
wobei der Sitz **dadurch gekennzeichnet ist, dass** die Rückziehmittel eine Stelleinheit (R) und ein Seil (C) umfassen, wobei die Stelleinheit an dem Sitzkissen (SC) oder der Rückenlehne (BR) befestigt ist und wobei das Seil ein erstes Ende hat, das an der Basis (B) des Sitzes befestigt ist, und ein zweites Ende, das an der Stelleinheit befestigt ist, so dass ein Rückziehen des Seils durch die Stelleinheit eine erzwungene Bewegung des Sitzkissens (SC) in Richtung der Basis (B) bewirkt,
wobei der Sitz mindestens einen aufblasbaren Airbag (BG) umfasst, der mit der Rückenlehne verbunden ist,
wobei die Rückziehmittel (R) aus einer fluiddynamischen Stelleinheit bestehen, die mit einem Vorrat an unter Druck stehendem Kaltgas so wirkverbunden ist, dass dann, wenn das unter Druck stehende Gas freigesetzt wird, das Aufblasen des Airbags (BG) und das Zusammenfallen des Sitzes (ST) gleichzeitig stattfinden.

2. Sitz nach Anspruch 1, weiter umfassend ein Ventil (V), verbunden mit dem Kolben und ausgeführt, um den Kolben (P) als Antwort auf das Airbag-Aktivierungssignal zu entlüften.

3. Sitz nach einem der Ansprüche 1 oder 2, weiter umfassend eine Kopfstütze (HR), einteilig mit einem oberen Ende der Rückenlehne, wobei die Rückenlehne einen Airbag (BG) umfasst, welcher, mindestens in aktiven, aufgeblasenen Zustand, einen Sitzenden ununterbrochen beidseitig umgibt und sich dabei über den Kopf des Sitzenden erstreckt.

4. Sitz nach Anspruch 3, wobei der Airbag von einer einzelnen aufblasbaren Kammer gebildet wird.

5. Sitz nach einem der vorstehenden Ansprüche, wobei der Airbag dazu ausgeführt ist, dann, wenn er einmal aktiviert ist, für mindestens 3 bis 4 Minuten aufgeblasen zu bleiben.

6. Sitz nach Anspruch 5, wobei die Aufblasmittel (T), zusätzlich zu einem Vorrat an unter Druck stehendem Kaltgas, einen Vorrat an Schaumstoff mit hoher Dichte umfassen, der ausgeführt ist, um in den Airbag eingespritzt zu werden, wenn dieser bereits mindestens teilweise durch das Kaltgas aufgeblasen ist.

7. Industrie- oder Nutzfahrzeug, umfassend einen Sitz (ST) nach einem der vorstehenden Ansprüche.

8. Fahrzeug nach Anspruch 7, weiter umfassend Mittel (G) zur Erkennung eines bevorstehenden Überschlags des Fahrzeugs, ausgeführt, um ein Aktivierungssignal zu erzeugen, um den Airbag (BG) zu aktivieren und/oder das Zusammenfallen des Sitzes nach einem der vorstehenden Ansprüche zu aktivieren.

## Revendications

1. Siège (ST) d'un véhicule commercial ou industriel comprenant un coussin de siège (SC) et un dossier (BR) relié au coussin de siège, ainsi qu'un système de support pneumatique comprenant au moins un piston (P), interposé entre une base (B) du siège destinée à être fixée à un plancher d'une cabine de véhicule, et une partie inférieure du coussin de siège (SC), dans lequel le siège comprend un système de rabattement du siège en réponse à un signal d'activation d'un airbag de véhicule, dans lequel ledit système de rabattement comprend des moyens de rétraction (R, D, C) configurés pour forcer ledit coussin de siège (SC) à se déplacer vers ladite base (B) en réponse audit signal d'activation,
le siège étant **caractérisé en ce que** lesdits moyens de rétraction comprennent un actionneur (R) et un câble (C), dans lequel ledit actionneur est fixé au coussin de siège (SC) ou au dossier (BR) et ledit câble a une première extrémité reliée à ladite base (B) du siège et une seconde extrémité reliée audit actionneur, de sorte qu'une rétraction du câble par l'actionneur provoque un déplacement forcé dudit coussin de siège (SC) vers la base (B),
dans lequel ledit siège comprend au moins un airbag (BG) gonflable associé audit dossier,
dans lequel lesdits moyens de rétraction (R) sont constitutés d'un actionneur dynamique fluide relié opérationnellement à une alimentation en gaz froid pressurisé, de sorte que, lorsque ledit gaz pressurisé est libéré, un gonflement dudit airbag (BG) et un rabattement du siège (ST) se déroulent simultanément.

2. Siège selon la revendication 1, comprenant en outre une vanne (V) associée audit piston et configurée pour évacuer l'air dudit piston (P) en réponse audit signal d'activation d'airbag.

3. Siège selon la revendication 1 ou 2, comprenant en outre un appui-tête (HR) d'un seul tenant avec une extrémité supérieure du dossier, dans lequel ledit dossier comprend un airbag (BG) qui, au moins dans une condition gonflée active, entoure sans interruption les deux côtés d'un occupant en passant au-dessus de la tête de l'occupant.

4. Siège selon la revendication 3, dans lequel ledit airbag est formé par une chambre gonflable unique.

5. Siège selon l'une quelconque des revendications précédentes, dans lequel ledit airbag est configuré de sorte que, une fois activé, il reste gonflé pendant au moins 3 à 4 minutes.

6. Siège selon la revendication 5, dans lequel lesdits moyens de gonflement (T) comprennent, en plus d'une alimentation en gaz froid pressurisé, une alimentation en mousse à haute densité, agencée pour être injectée dans ledit airbag, lorsqu'il est déjà au moins partiellement gonflé par ledit gaz froid.

7. Véhicule industriel ou commercial comprenant un siège (ST) selon l'une quelconque des revendications précédentes.

8. Véhicule selon la revendication 7, comprenant en outre des moyens (G) pour détecter un futur retournement du véhicule, configuré pour générer un signal d'activation pour activer ledit airbag (BG) et/ou pour activer le rabattement dudit siège selon l'une quelconque des revendications précédentes.
